# EUROPEAN PATENT APPLICATION

(11) **EP 3 637 581 A1**
(43) Date of publication of application: **15.04.2020**
(21) Application number: 19824995.5
(22) Date of filing: 28.02.2019
(51) Int. Cl.: H02J 7/35, H02S 40/32, H02J 3/38

(54) **PHOTOVOLTAIC SYSTEM**

(30) Priority: 29.06.2018 CN 201810699706
(71) Applicant: Huawei Technologies Co. Ltd., Guangdong 518129 (CN)
(72) Inventor: ZHANG, Xianmiao, Shenzhen, Guangdong 518129 (CN); TANG, Ting, Shenzhen, Guangdong 518129 (CN); XU, Fei, Shenzhen, Guangdong 518129 (CN); LIU, Shichuan, Shenzhen, Guangdong 518129 (CN); ZHENG, Xiaoyong, Shenzhen, Guangdong 518129 (CN)
(74) Representative: Gill Jennings & Every LLP
(86) International application number: PCT/CN2019/076593
(87) International publication number: WO 2020/001051

(57) **Abstract**

This application discloses a photovoltaic system, so as to improve energy utilization. The system includes a photovoltaic array, an energy storage converter, a storage battery, and a photovoltaic inverter, where the energy storage converter is connected to the photovoltaic array, the storage battery, and the photovoltaic inverter, and is configured to: when electrical energy of a direct current generated by the photovoltaic array in a unit time is greater than electrical energy required by a power grid in a unit time, supply one portion of the input direct current to the photovoltaic inverter, and store the other portion of the direct current into the storage battery; or when electrical energy of a direct current generated by the photovoltaic array in a unit time is less than electrical energy required by a power grid in a unit time, supply the input direct current to the photovoltaic inverter as one portion of a direct current, and obtain the other portion of the direct current from the storage battery and supply the other portion of the direct current to the photovoltaic inverter. This omits a process of sending a control instruction to the energy storage converter by the photovoltaic inverter, so that the energy storage converter controls, in a more timely manner, the storage battery to switch between an electricity storing state and an electricity discharging state, thereby helping improve energy utilization.

## Description

This application claims priority to Chinese Patent Application No. 201810699706.X, filed with the Chinese Patent Office on June 29, 2018 and entitled "PHOTOVOLTAIC SYSTEM", which is incorporated herein by reference in its entirety.

### TECHNICAL FIELD

This application relates to the field of photovoltaic power generation technologies, and in particular, to a photovoltaic system.

### BACKGROUND

A photovoltaic system can convert light energy into electrical energy, and supply power to a three-phase power grid. Usually, the photovoltaic system includes a photovoltaic inverter, a direct current port of the photovoltaic inverter is connected to a photovoltaic array, and an alternating current port of the photovoltaic inverter is connected to the three-phase power grid. The photovoltaic inverter can convert a direct current generated by the photovoltaic array into an alternating current and output the alternating current to the three-phase power grid. Due to a relatively large fluctuation in an output power of the photovoltaic array, most photovoltaic systems use a photovoltaic over-match technical solution, that is, a ratio of a theoretical output power of a photovoltaic array to a conversion power of a photovoltaic inverter being greater than 1:1.

For a photovoltaic system that uses the photovoltaic over-match solution, when an output power of a photovoltaic array is satisfactory, a photovoltaic inverter cannot convert all direct currents output by the photovoltaic array into an alternating current and output the alternating current to a three-phase power grid, resulting in a waste. Therefore, an energy storage converter and a storage battery need to be added to the photovoltaic system, to store excess energy in the storage battery. In an existing photovoltaic system, a photovoltaic inverter is connected to a photovoltaic array and an energy storage converter, and provides a control instruction to the energy storage converter based on a magnitude of electrical energy of a direct current supplied by the photovoltaic array, and the energy storage converter switches between an energy storage path and an electricity discharging path according to the control instruction, thereby implementing control on electricity storing and electricity discharging of a storage battery.

However, there is a delay in a process in which the photovoltaic inverter provides the control instruction to the energy storage converter. As a result, the storage battery is not controlled in a timely manner to switch between electricity storing and electricity discharging, thereby reducing energy utilization of the photovoltaic system. Therefore, the energy utilization of the existing photovoltaic system with an energy storage function needs to be further improved.

### SUMMARY

This application provides a photovoltaic system, so as to improve energy utilization of the photovoltaic system.

According to a first aspect, an embodiment of this application provides a photovoltaic system, including a photovoltaic array, an energy storage converter, a storage battery, and a photovoltaic inverter. The photovoltaic array is configured to convert absorbed light energy into electrical energy of a direct current, and output the direct current to the energy storage converter. The energy storage converter includes at least one photovoltaic port, at least one storage battery port, and at least one inverter port. The at least one photovoltaic port of the energy storage converter is connected to the photovoltaic array, the at least one storage battery port is connected to the storage battery, and the at least one inverter port is connected to the photovoltaic inverter. The energy storage converter is configured to: when electrical energy of a direct current generated by the photovoltaic array in a unit time is greater than electrical energy required by a power grid in a unit time, supply, to the photovoltaic inverter through the inverter port, one portion of the direct current input from the photovoltaic port, and store, into the storage battery through the storage battery port, the other portion of the direct current input from the photovoltaic port; or when electrical energy of a direct current generated by the photovoltaic array in a unit time is less than electrical energy required by a power grid in a unit time, supply, to the photovoltaic inverter through the inverter port, the direct current input from the photovoltaic port as one portion of a direct current, and obtain the other portion of the direct current from the storage battery through the storage battery port and supply the other portion of the direct current to the photovoltaic inverter through the inverter port. The storage battery is configured to store a direct current supplied by the energy storage converter or to supply a direct current to the energy storage converter. The photovoltaic inverter includes at least one direct current port and at least one alternating current port. The at least one direct current port of the photovoltaic inverter is connected to the inverter port of the energy storage converter, and the at least one alternating current port is connected to the power grid. The photovoltaic inverter is configured to: receive a direct current from the energy storage converter through the direct current port, convert the direct current into an alternating current, and output the alternating current to the power grid through the alternating current port.

In the foregoing system architecture, the photovoltaic array is directly connected to the energy storage converter, and the energy storage converter directly controls, based on a magnitude relationship between the electrical energy of the direct current generated by the photovoltaic array in the unit time and the electrical energy required by the power grid in the unit time, the storage battery to store or discharge electricity. This omits a process of sending an instruction to the energy storage converter by the photovoltaic inverter, thereby reducing a delay in controlling the storage battery to switch between an electricity storing state and an electricity discharging state, and helping improve energy utilization of the system.

Based on the first aspect, in a possible implementation, the energy storage converter is further configured to: when the electrical energy of the direct current generated by the photovoltaic array in the unit time is greater than the electrical energy required by the power grid in the unit time, perform maximum power point tracking on the photovoltaic array based on the electrical energy of the direct current generated by the photovoltaic array in the unit time; or when the electrical energy of the direct current generated by the photovoltaic array in the unit time is less than the electrical energy required by the power grid in the unit time, send a first instruction to the photovoltaic inverter, where the first instruction is used to trigger the photovoltaic inverter to perform maximum power point tracking on the photovoltaic array.

In the foregoing system architecture, the energy storage converter is connected to the photovoltaic array and the photovoltaic inverter by using different ports. Therefore, the energy storage converter can relatively accurately determine an energy value of the electrical energy of the direct current supplied by the photovoltaic array to the energy storage converter in the unit time, so that a maximum power point of the photovoltaic array can be more accurately tracked, thereby improving energy utilization of the photovoltaic system. When the electrical energy of the direct current generated by the photovoltaic array in the unit time is less than the electrical energy required by the power grid in the unit time, the energy storage converter cannot perform maximum power point tracking on the photovoltaic array. In this case, the energy storage converter may trigger a maximum power point tracking function of the photovoltaic inverter by using the first instruction, so that the photovoltaic inverter implements maximum power point tracking on the photovoltaic array.

Based on the first aspect, in a possible implementation, the energy storage converter includes a control unit and a plurality of converter units. The control unit is connected to the plurality of converter units, and is configured to: for any converter unit, determine, based on the electrical energy required by the power grid in the unit time, unit electrical energy that needs to be supplied by the converter unit to the photovoltaic inverter in a unit time; and when electrical energy of a direct current received by the converter unit from the photovoltaic port in a unit time is greater than the unit electrical energy of the converter unit, provide a first control signal to the converter unit; or when electrical energy of a direct current received by the converter unit from the photovoltaic port in a unit time is less than the unit electrical energy of the converter unit, provide a second control signal to the converter unit; and the plurality of converter units of the energy storage converter are respectively connected to a plurality of photovoltaic ports and a plurality of inverter ports of the energy storage converter in a one-to-one correspondence manner, and any one of the converter units is configured to: receive a direct current input from a corresponding photovoltaic port; and when receiving the first control signal provided by the control unit, supply, to the photovoltaic inverter through a corresponding inverter port, one portion of the direct current received from the corresponding photovoltaic port, and store, into the storage battery through the storage battery port, the other portion of the direct current input from the corresponding photovoltaic port; or when receiving the second control signal provided by the control unit, supply, to the photovoltaic inverter through a corresponding inverter port, the direct current received from the corresponding photovoltaic port as one portion of a direct current, and obtain the other portion of the direct current from the storage battery through the storage battery port and supply the other portion of the direct current to the photovoltaic inverter through the corresponding inverter port.

In the foregoing system architecture, the plurality of converter units of the energy storage converter are respectively connected to the plurality of photovoltaic ports in a one-to-one correspondence manner, so that the energy storage converter can implement finer maximum power point tracking on the photovoltaic array. In addition, the plurality of converter units are respectively connected to the plurality of inverter ports in a one-to-one correspondence manner, so that the energy storage converter can be connected to a string photovoltaic inverter. This provides a basis for integrating the string photovoltaic inverter into the photovoltaic system.

Based on the first aspect, in a possible implementation, the converter unit includes an energy sensor, a first node, and a first DC/DC converter, and the first node is connected to an inverter port corresponding to the converter unit; the energy sensor is connected to a photovoltaic port corresponding to the converter unit, the first node, and the control unit, and is configured to: detect an energy value of electrical energy of a direct current that is received from the photovoltaic port in a unit time and transferred to the first node, and provide the energy value to the control unit; and the first DC/DC converter is connected to the control unit, the first node, and the storage battery port, and is configured to: when receiving the first control signal provided by the control unit, supply, to the photovoltaic inverter through the inverter port to which the first node is connected, one portion of the direct current that flows from the energy sensor to the first node, and store, into the storage battery through the storage battery port, the other portion of the direct current that flows from the energy sensor to the first node; or when receiving the second control signal provided by the control unit, supply, to the photovoltaic inverter through the inverter port to which the first node is connected, the direct current that flows from the energy sensor to the first node as one portion of a direct current, and obtain the other portion of the direct current from the storage battery through the storage battery port and supply the other portion of the direct current to the photovoltaic inverter through the inverter port to which the first node is connected.

In the foregoing system architecture, a specific implementation structure of the energy storage converter is provided.

Based on the first aspect, in a possible implementation, the photovoltaic inverter includes an AC/DC converter, a plurality of second DC/DC converters, an alternating current port, and a plurality of direct current ports; the plurality of second DC/DC converters are respectively connected to the AC/DC converter and the plurality of direct current ports in a one-to-one correspondence manner, and any one of the second DC/DC converters is configured to: receive, from a corresponding direct current port, a direct current supplied by the energy storage converter, boost the direct current, and supply a boosted direct current to the AC/DC converter; and the AC/DC converter is connected to the alternating current port of the photovoltaic inverter, and is configured to: receive boosted direct currents supplied by the plurality of second DC/DC converters, convert the boosted direct currents into an alternating current, and output the alternating current to the power grid through the alternating current port.

In the foregoing system architecture, the photovoltaic inverter in the system may be a string photovoltaic inverter. When performing maximum power point tracking on a photovoltaic array, the string photovoltaic inverter has higher precision and higher energy utilization than a centralized photovoltaic inverter. Therefore, the foregoing system architecture helps further improve entire energy utilization of the photovoltaic system.

Based on the first aspect, in a possible implementation, the energy storage converter is further configured to: after sending the first instruction to the photovoltaic inverter, send a plurality of pieces of electrical energy information to the photovoltaic inverter, where the plurality of pieces of electrical energy information respectively include unit identifiers of the plurality of converter units and energy values of electrical energy of direct currents that are obtained from the storage battery in a unit time by the converter units corresponding to the unit identifiers; and when performing maximum power point tracking on the photovoltaic array, the photovoltaic inverter is specifically configured to: for any one piece of electrical energy information, determine, based on a unit identifier of a converter unit in the electrical energy information, a target DC/DC converter corresponding to a first converter unit, where the first converter unit is a converter unit, corresponding to the unit identifier, in the plurality of converter units of the energy storage converter, and the target DC/DC converter is a second DC/DC converter that receives a direct current supplied by the first converter unit and that is in the plurality of second DC/DC converters of the photovoltaic inverter; determine an energy value of electrical energy of a direct current that is received by the target DC/DC converter from a corresponding direct current port in a unit time; determine, based on an energy value in the electrical energy information and the energy value of the electrical energy of the direct current that is received by the target DC/DC converter from the corresponding direct current port in the unit time, an energy value of electrical energy of a direct current that is supplied by a first photovoltaic subarray in the photovoltaic array to the energy storage converter in a unit time, where the first photovoltaic subarray is a photovoltaic subarray that supplies the direct current to the first converter unit and that is in a plurality of photovoltaic subarrays of the photovoltaic array; and perform maximum power point tracking on the first photovoltaic subarray based on the energy value of the electrical energy of the direct current that is supplied by the first photovoltaic subarray to the energy storage converter in the unit time.

In the foregoing system architecture, the photovoltaic inverter can determine, based on the plurality of pieces of electrical energy information provided by the energy storage converter, an energy value of electrical energy of a direct current that is supplied to the energy storage converter in a unit time by each photovoltaic subarray, connected to the energy storage converter, in the photovoltaic array, and then can perform maximum power point tracking on each photovoltaic subarray. This retains a finer maximum power point tracking feature of a string photovoltaic inverter. In addition, compared with an existing system architecture in which an energy storage converter and a photovoltaic array are directly coupled on a direct current side of a photovoltaic inverter, the photovoltaic inverter in this application more accurately determines the energy value of the electrical energy of the direct current that is supplied to the energy storage converter in a unit time by each photovoltaic subarray connected to the energy storage converter, further improving precision of maximum power point tracking.

Based on the first aspect, in a possible implementation, the energy storage converter includes a plurality of photovoltaic ports, and the photovoltaic array includes a plurality of photovoltaic subarrays. The plurality of photovoltaic subarrays are respectively connected to the plurality of photovoltaic ports in a one-to-one correspondence manner. The photovoltaic inverter includes a plurality of direct current ports, and the energy storage converter includes a plurality of inverter ports. The plurality of direct current ports are respectively connected to the plurality of inverter ports in a one-to-one correspondence manner.

This application provides a specific possible connection relationship between the energy storage converter, the photovoltaic inverter, and the photovoltaic array.

Based on the first aspect, in a possible implementation, the photovoltaic inverter includes a first photovoltaic inverter and a second photovoltaic inverter, and the photovoltaic array includes a plurality of photovoltaic subarrays and a plurality of additional subarrays; the first photovoltaic inverter includes a plurality of first direct current ports, one part of the first direct current ports are connected to one part of the inverter ports of the energy storage converter in a one-to-one correspondence manner, and the other part of the first direct current ports are connected to one part of the additional subarrays of the photovoltaic array in a one-to-one correspondence manner; the second photovoltaic inverter includes a plurality of second direct current ports, one part of the second direct current ports are connected to the other part of the inverter ports of the energy storage converter in a one-to-one correspondence manner, and the other part of the second direct current ports are connected to the other part of the additional subarrays of the photovoltaic array in a one-to-one correspondence manner; the first photovoltaic inverter is configured to: determine energy values of electrical energy of direct currents input by the first direct current ports that are connected to the one part of the additional subarrays, and provide the energy values to the energy storage converter; the second photovoltaic inverter is configured to: determine energy values of electrical energy of direct currents input by the second direct current ports that are connected to the other part of the additional subarrays, and provide the energy values to the energy storage converter; and the energy storage converter is specifically configured to: determine, based on the electrical energy required by the power grid in the unit time, electrical energy of a first alternating current that needs to be output by the first photovoltaic inverter in a unit time and electrical energy of a second alternating current that needs to be output by the second photovoltaic inverter in a unit time; determine, based on the energy values provided by the first photovoltaic inverter and the electrical energy of the first alternating current, electrical energy of a first direct current required by the first photovoltaic inverter in a unit time; determine, based on the energy values provided by the second photovoltaic inverter and the electrical energy of the second alternating current, electrical energy of a second direct current required by the second photovoltaic inverter in a unit time; and when electrical energy of direct currents input from the photovoltaic ports in a unit time is greater than a sum of the electrical energy of the first direct current and the electrical energy of the second direct current, supply, to the first photovoltaic inverter and the second photovoltaic inverter through the inverter ports, one portion of the direct currents input from the photovoltaic ports, and store, into the storage battery through the storage battery port, the other portion of the direct currents input from the photovoltaic ports; or when electrical energy of direct currents input from the photovoltaic ports in a unit time is less than a sum of the electrical energy of the first direct current and the electrical energy of the second direct current, supply, to the first photovoltaic inverter and the second photovoltaic inverter through the inverter ports, the direct currents input from the photovoltaic ports as one portion of a direct current, and obtain the other portion of the direct current from the storage battery through the storage battery port and supply the other portion of the direct current to the first photovoltaic inverter and the second photovoltaic inverter through the inverter ports.

When conversion efficiency of a single photovoltaic inverter and theoretical luminous efficiency of a photovoltaic array are fixed, the foregoing system architecture can implement a lower over-match ratio.

Based on the first aspect, in a possible implementation, the photovoltaic array includes a first photovoltaic array and a second photovoltaic array, the energy storage converter includes a first energy storage converter and a second energy storage converter, and the storage battery includes a first storage battery and a second storage battery; first photovoltaic ports of the first energy storage converter are connected to the first photovoltaic array, first inverter ports of the first energy storage converter are connected to one part of the direct current ports of the photovoltaic inverter, and a first storage battery port of the first energy storage converter is connected to the first storage battery; second photovoltaic ports of the second energy storage converter are connected to the second photovoltaic array, second inverter ports of the second energy storage converter are connected to the other part of the direct current ports of the photovoltaic inverter, and a second storage battery port of the second energy storage converter is connected to the second storage battery; the first energy storage converter is configured to: determine, based on electrical energy of an alternating current required by the power grid in a unit time, electrical energy of a third direct current that needs to be supplied to the photovoltaic inverter by the first energy storage converter in a unit time and electrical energy of a fourth direct current that needs to be supplied to the photovoltaic inverter by the second energy storage converter in a unit time, and provide an energy value of the electrical energy of the fourth direct current to the second energy storage converter; and when electrical energy of direct currents generated by the first photovoltaic array in a unit time is greater than the electrical energy of the third direct current, supply, to the photovoltaic inverter through the first inverter ports, one portion of the direct currents input from the first photovoltaic ports, and store, into the first storage battery through the first storage battery port, the other portion of the direct currents input from the first photovoltaic ports; or when electrical energy of direct currents generated by the first photovoltaic array in a unit time is less than the electrical energy of the third direct current, supply, to the photovoltaic inverter through the first inverter ports, the direct currents input from the first photovoltaic ports as one portion of a direct current, and obtain the other portion of the direct current from the first storage battery through the first storage battery port and supply the other portion of the direct current to the photovoltaic inverter through the first inverter ports; and the second energy storage converter is configured to: obtain the energy value, provided by the first energy storage converter, of the electrical energy of the fourth direct current; and when electrical energy of direct currents generated by the second photovoltaic array in a unit time is greater than the electrical energy of the fourth direct current, supply, to the photovoltaic inverter through the second inverter ports, one portion of the direct currents input from the second photovoltaic ports, and store, into the second storage battery through the second storage battery port, the other portion of the direct currents input from the second photovoltaic ports; or when electrical energy of direct currents generated by the second photovoltaic array in a unit time is less than the electrical energy of the fourth direct current, supply, to the photovoltaic inverter through the second inverter ports, the direct currents input from the second photovoltaic ports as one portion of a direct current, and obtain the other portion of the direct current from the second storage battery through the second storage battery port and supply the other portion of the direct current to the photovoltaic inverter through the second inverter ports.

When conversion efficiency of a photovoltaic inverter and theoretical luminous efficiency of a single photovoltaic array are fixed, the foregoing system architecture can implement a higher over-match ratio.

The storage battery may include a lead carbon battery, and/or a lithium iron phosphate battery, and/or a ternary lithium battery, and/or a sodium sulfur battery, and/or a flow battery.

In a possible implementation, the electrical energy required by the power grid in the unit time is determined by the energy storage converter according to a power supply instruction sent by the power grid.

### BRIEF DESCRIPTION OF DRAWINGS

FIG. 1 is a schematic diagram of a system architecture of a direct current coupled photovoltaic system;
FIG. 2 is a schematic architectural diagram of a photovoltaic system according to an embodiment of this application;
FIG. 3 is a schematic structural diagram of a photovoltaic array;
FIG. 4 is a schematic structural diagram of a centralized photovoltaic inverter;
FIG. 5 is a schematic diagram of a communication connection relationship between an energy storage converter and a power grid according to an embodiment of this application;
FIG. 6 is a schematic structural diagram of an energy storage converter according to an embodiment of this application;
FIG. 7 is a schematic structural diagram of an energy storage converter according to an embodiment of this application;
FIG. 8 is a schematic structural diagram of a string photovoltaic inverter;
FIG. 9 is a first schematic diagram of a possible photovoltaic system architecture according to an embodiment of this application;
FIG. 10 is a second schematic diagram of a possible photovoltaic system architecture according to an embodiment of this application; and
FIG. 11 is a third schematic diagram of a possible photovoltaic system architecture according to an embodiment of this application.

### DESCRIPTION OF EMBODIMENTS

The following further describes in detail the embodiments of this application with reference to accompanying drawings.

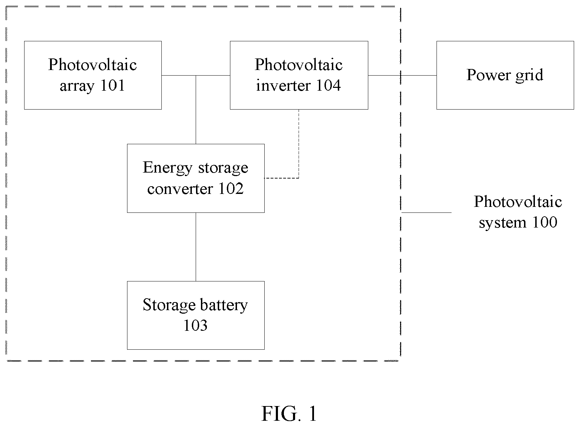

FIG. 1 is a schematic diagram of a system architecture of a direct current coupled photovoltaic system. As shown in FIG. 1, the photovoltaic system 100 includes a photovoltaic array 101, an energy storage converter 102, a storage battery 103, and a photovoltaic inverter 104. The photovoltaic array 101 is connected to the photovoltaic inverter 104, and is configured to: convert absorbed light energy into electrical energy of a direct current, and output the direct current to the photovoltaic inverter 104. The photovoltaic inverter 104 is connected to a power grid and the energy storage converter 102, and is configured to: determine electrical energy required by the power grid in a unit time; and when electrical energy of a direct current generated by the photovoltaic array 101 in the unit time is greater than the electrical energy required by the power grid in the unit time, send a first control instruction to the energy storage converter 102; or when electrical energy of a direct current generated by the photovoltaic array 101 in a unit time is not greater than the electrical energy required by the power grid in the unit time, send a second control instruction to the energy storage converter 102; and receive a direct current from the photovoltaic array 101 and/or the energy storage converter 102, convert the direct current into an alternating current, and output the alternating current to the power grid. The energy storage converter 102 is connected to the storage battery 103, and is configured to: when receiving the first control instruction, store one portion of the direct current generated by the photovoltaic array 101 into the storage battery 103; or when receiving the second control instruction, obtain one portion of a direct current from the storage battery 103, and supply the portion of the direct current to the photovoltaic inverter 104.

For the photovoltaic system 100 shown in FIG. 1, the energy storage converter 102 controls, according to a control instruction from the photovoltaic inverter 104, the storage battery 103 to store or discharge electricity. Because there is a delay in a process in which the photovoltaic inverter 104 provides the control instruction to the energy storage converter 102, the storage battery 103 does not switch between electricity storing and electricity discharging in a timely manner, thereby reducing energy utilization of the photovoltaic system 100.

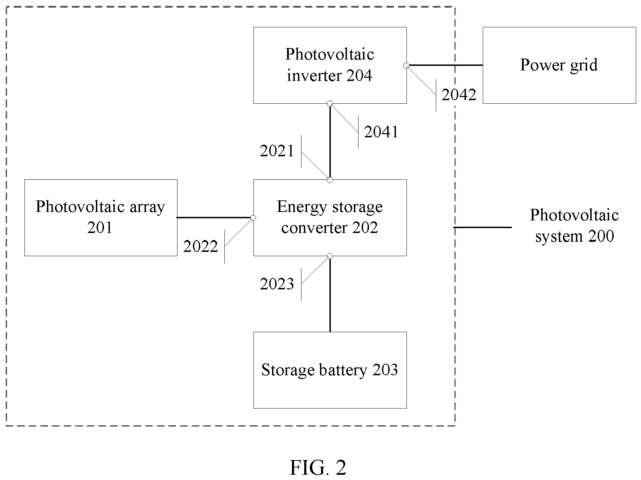

Based on this, an embodiment of this application provides a photovoltaic system architecture. FIG. 2 is a schematic architectural diagram of a photovoltaic system according to an embodiment of this application. As shown in FIG. 2, the photovoltaic system 200 includes a photovoltaic array 201, an energy storage converter 202, a storage battery 203, and a photovoltaic inverter 204. The energy storage converter 202 includes at least one inverter port 2021, at least one photovoltaic port 2022, and at least one storage battery port 2023. In the photovoltaic system 200, the energy storage converter 202 is connected to the photovoltaic inverter 204 through the at least one inverter port 2021, is connected to the photovoltaic array 201 through the at least one photovoltaic port 2022, and is connected to the storage battery 203 through the at least one storage battery port 2023. The photovoltaic inverter 204 includes at least one direct current port 2041 and an alternating current port 2042. The photovoltaic inverter 204 is connected to the at least one inverter port 2021 of the energy storage converter through the at least one direct current port 2041, and is connected to a power grid through the alternating current port 2042.

When the photovoltaic system 200 supplies power to the power grid, the photovoltaic array 201 converts absorbed light energy into electrical energy of a direct current, and outputs the direct current to the energy storage converter 202. The energy storage converter 202 receives, through the photovoltaic port 2022, the direct current supplied by the photovoltaic array 201. When electrical energy of a direct current generated by the photovoltaic array 201 in a unit time is greater than electrical energy required by the power grid in a unit time, the energy storage converter 202 supplies, to the photovoltaic inverter 204 through the inverter port 2021, one portion of the direct current input from the photovoltaic port 2022, and stores, into the storage battery 203 through the storage battery port 2023, the other portion of the direct current input from the photovoltaic port 2022. When electrical energy of a direct current generated by the photovoltaic array 201 in a unit time is less than electrical energy required by the power grid in a unit time, the energy storage converter 202 supplies, to the photovoltaic inverter 204 through the inverter port 2021, the direct current input from the photovoltaic port 2022 as one portion of a direct current, and obtains the other portion of the direct current from the storage battery 203 through the storage battery port 2023 and supplies the other portion of the direct current to the photovoltaic inverter 204 through the inverter port 2021. The photovoltaic inverter 204 receives, through the direct current port, a direct current supplied by the energy storage converter 202, converts the direct current into an alternating current, and outputs the alternating current to the power grid through the alternating current port 2042.

It should be understood that a connection relationship between the photovoltaic system 200 and the power grid in FIG. 2 is simplified for illustration, and in specific implementation, another power grid device may be alternatively connected between the photovoltaic system 200 and the power grid. For example, a transformer may be alternatively connected between the photovoltaic system 200 and the power grid. The transformer boosts the alternating current supplied by the photovoltaic system 200 to implement high-voltage delivery and the like. A conventional technology of this category in the art is not limited in this application.

In the photovoltaic system 200 shown in FIG. 2, the photovoltaic array 201 is directly connected to the energy storage converter 202, and the energy storage converter 202 directly controls, based on a magnitude relationship between the electrical energy of the direct current generated by the photovoltaic array 201 in the unit time and the electrical energy required by the power grid in the unit time, the storage battery 203 to store or discharge electricity. This omits a process of sending an instruction to the energy storage converter 202 by the photovoltaic inverter 204, thereby reducing a delay in controlling the storage battery 203 to switch between an electricity storing state and an electricity discharging state, and improving energy utilization of the system.

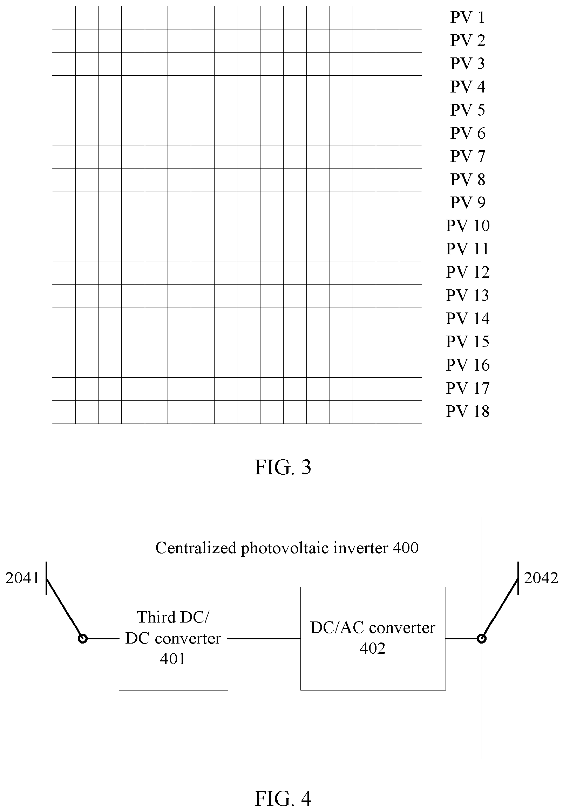

In the photovoltaic system 200 shown in FIG. 2, the photovoltaic array 201 may be an array structure including a plurality of photovoltaic batteries, for example, a photovoltaic array shown in FIG. 3. Each small square in FIG. 3 represents a photovoltaic battery. A row of photovoltaic batteries in the photovoltaic array are connected in parallel to form a photovoltaic string PV (for example, a PV 1 to a PV 18 in FIG. 3). Generally, a photovoltaic string may be used as a basic unit for adjusting light conversion efficiency of the photovoltaic array. In the photovoltaic system 200 provided in this application, the photovoltaic array 201 includes at least one photovoltaic subarray, and any photovoltaic subarray includes at least one photovoltaic string PV. When the photovoltaic subarray in the photovoltaic array is connected to the energy storage converter 102, photovoltaic strings PVs that belong to a same photovoltaic subarray are connected to a same photovoltaic port 2022 of the energy storage converter 202, and photovoltaic strings PVs that belong to different photovoltaic subarrays are connected to different photovoltaic ports 2022 of the energy storage converter 202.

In the photovoltaic system 200 shown in FIG. 2, the storage battery 203 may be a single storage battery, or may be a storage battery cluster including a plurality of storage batteries. In specific implementation, the storage battery 203 may be one or a combination of a lead carbon battery, a lithium iron phosphate battery, a ternary lithium battery, a sodium sulfur battery, and a flow battery, and selection may be flexibly made based on an actual application environment, a cost budget, and the like.

In the photovoltaic system 200 shown in FIG. 2, the photovoltaic inverter 204 may be a centralized photovoltaic inverter. A centralized photovoltaic inverter 400 shown in FIG. 4 includes a third DC/DC converter 401 and an alternating current-direct current (DC/AC) converter 402. One end of the third DC/DC converter 401 is connected to the direct current terminal 2041 of the centralized photovoltaic inverter 400, and the other end is connected to a direct current end of the DC/AC converter 402. The third DC/DC converter 401 is configured to: receive, from the direct current terminal 2041, a direct current supplied by the energy storage converter 202, boost the direct current, and supply the direct current to the DC/AC converter 402. An alternating current end of the DC/AC converter is connected to the alternating current port 2042 of the centralized photovoltaic inverter 400, and is configured to convert the boosted direct current into an alternating current, and output the alternating current to the power grid through the alternating current port 2042. A centralized photovoltaic inverter has a simpler structure than a string photovoltaic inverter, and is easier to be integrated into a photovoltaic system.

In the photovoltaic system 200 shown in FIG. 2, the energy storage converter 202 controls, based on a relative magnitude relationship between the electrical energy of the direct current generated by the photovoltaic array 201 in the unit time and the electrical energy required by the power grid in the unit time, the storage battery 203 to store or discharge electricity. When the electrical energy of the direct current generated by the photovoltaic array 201 in the unit time is greater than the electrical energy required by the power grid in the unit time, there is still remaining electrical energy after the electrical energy of the direct current generated by the photovoltaic array 201 in the unit time meets the electrical energy required by the power grid in the unit time. In this case, the energy storage converter 202 supplies, to the photovoltaic inverter 204 through the inverter port 2021, one portion of the direct current input from the photovoltaic port 2022, to meet an electrical energy requirement of the power grid; and simultaneously stores, into the storage battery 203 through the storage battery port 2023, the other portion of the direct current input from the photovoltaic port 2022, so that the storage battery 203 stores the remaining electrical energy, thereby reducing a waste of the electrical energy of the direct current generated by the photovoltaic array 201, and improving energy utilization of the photovoltaic system 200. When the electrical energy of the direct current generated by the photovoltaic array 201 in the unit time is less than the electrical energy required by the power grid in the unit time, the electrical energy of the direct current generated by the photovoltaic array 201 in the unit time cannot meet an electrical energy requirement of the power grid. In this case, the energy storage converter 202 supplies, to the photovoltaic inverter 204 through the inverter port 2021, the direct current input from the photovoltaic port 2022 as one portion of a direct current; and obtains the other portion of the direct current from the storage battery 203 through the storage battery port 2023 and supplies the other portion of the direct current to the photovoltaic inverter 204 through the inverter port 2021. Electrical energy of the direct current obtained from the storage battery 203 may compensate for a difference between the electrical energy of the direct current generated by the photovoltaic array 2021 in the unit time and the electrical energy required by the power grid in the unit time, so as to meet the electrical energy requirement of the power grid.

In the photovoltaic system 200 shown in FIG. 2, the energy storage converter 202 may determine, in at least the following two manners, the electrical energy required by the power grid in the unit time:

Manner 1: The energy storage converter 202 internally includes preset values, and the preset values may be used as the electrical energy required by the power grid in the unit time. For example, power consumption during the day on a workday is low, and the energy storage converter 202 may use a relatively small preset value as the electrical energy required by the power grid in the unit time, whereas power consumption at night on a workday is high, and the energy storage converter 202 may use a relatively large preset value as the electrical energy required by the power grid in the unit time. The foregoing manner 1 is easy to implement, and is more suitable for a scenario in which a power supply status of the power grid is relatively simple.

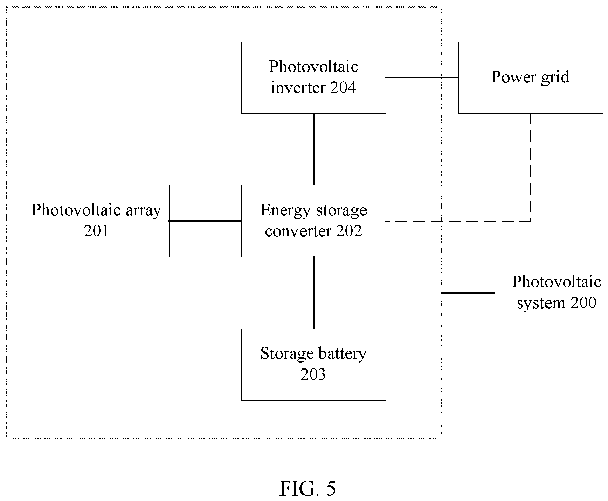

Manner 2: A wired or wireless communications connection is further included between the energy storage converter 202 and the power grid, as being indicated by a dashed line between the energy storage converter 202 and the power grid in FIG. 5. The power grid sends a power supply instruction to the energy storage converter 202 periodically or in real time. The energy storage converter 202 determines the electrical energy required by the power grid in the unit time according to the power supply instruction sent by the power grid. The foregoing manner 2 provides more accurate determining on the electrical energy required by the power grid in the unit time, and is particularly suitable for a scenario in which a power supply status of the power grid is relatively complicated.

In the field of photovoltaic power generation technologies, maximum power point tracking (maximum power point tracking, MPPT) on a photovoltaic array is mostly performed by a photovoltaic inverter. This can significantly increase an output power of the photovoltaic array, and further improve energy utilization of a photovoltaic system. However, it can be learned from the architecture of the direct current coupled photovoltaic system shown in FIG. 1 that the direct current supplied by the photovoltaic array 101 and the direct current supplied by the energy storage converter 102 are coupled on a direct current side of the photovoltaic inverter 104 and then input to the photovoltaic inverter 104, and a direct current received by the photovoltaic inverter 104 is actually a direct current obtained after the direct currents supplied by the photovoltaic array 101 and the energy storage converter 102 are coupled. Therefore, when performing maximum power point tracking on the photovoltaic array 101, the photovoltaic inverter 104 is interfered by the direct current supplied by the energy storage converter 102, and consequently cannot accurately track a maximum power point of the photovoltaic array 101. This is unfavorable to further improvement of energy utilization of the photovoltaic system.

Based on this, in a feasible implementation, the energy storage converter 202 in the photovoltaic system 200 shown in FIG. 2 further has a maximum power point tracking function. When the electrical energy of the direct current generated by the photovoltaic array 201 in the unit time is greater than the electrical energy required by the power grid in the unit time, the energy storage converter 202 performs maximum power point tracking on the photovoltaic array 201 based on the electrical energy of the direct current generated by the photovoltaic array 201 in the unit time. When the electrical energy of the direct current generated by the photovoltaic array 201 in the unit time is less than the electrical energy required by the power grid in a unit time, the energy storage converter 202 sends a first instruction to the photovoltaic inverter 204, where the first instruction is used to trigger the photovoltaic inverter 204 to perform maximum power point tracking on the photovoltaic array 201.

In the foregoing system architecture, the energy storage converter 202 is connected to the photovoltaic array 201 and the photovoltaic inverter 204 by using different ports. Therefore, the energy storage converter 202 can relatively accurately determine an energy value of the electrical energy of the direct current supplied by the photovoltaic array 201 to the energy storage converter 202 in the unit time, so that a maximum power point of the photovoltaic array 201 can be more accurately tracked, thereby improving energy utilization of the photovoltaic system 200.

In an existing photovoltaic system, maximum power point tracking is implemented by a DC/DC converter in a photovoltaic inverter. Because an energy storage converter is configured to obtain a direct current from a storage battery or to store a direct current into a storage battery, there is also a DC/DC converter in the energy storage converter to boost or buck a direct current. In this application, the DC/DC converter in the energy storage converter may be used to implement a maximum power point tracking function of the energy storage converter. In the photovoltaic system 200 shown in FIG. 2, when the electrical energy of the direct current generated by the photovoltaic array 201 in the unit time is less than the electrical energy required by the power grid in the unit time, the energy storage converter 202 outputs all the direct current generated by the photovoltaic array 201 in the unit time to the photovoltaic inverter 204, and simultaneously obtains a direct current from the storage battery 203. In this case, a DC/DC converter is configured to transform the direct current obtained from the storage battery 203. The direct current generated by the photovoltaic array 201 does not pass through the DC/DC converter in the energy storage converter 202. Therefore, when the electrical energy of the direct current generated by the photovoltaic array 201 in the unit time is less than the electrical energy required by the power grid in the unit time, the energy storage converter 202 cannot perform maximum power point tracking on the photovoltaic array 201. To ensure that maximum power point tracking is performed on the photovoltaic array 201, the energy storage converter 202 sends the first instruction to the photovoltaic inverter 24 when the electrical energy of the direct current generated by the photovoltaic array 201 in the unit time is less than the electrical energy required by the power grid in the unit time. A maximum power point tracking function of the photovoltaic inverter 204 is triggered by the first instruction, and the photovoltaic inverter 204 performs maximum power point tracking on the photovoltaic array 201.

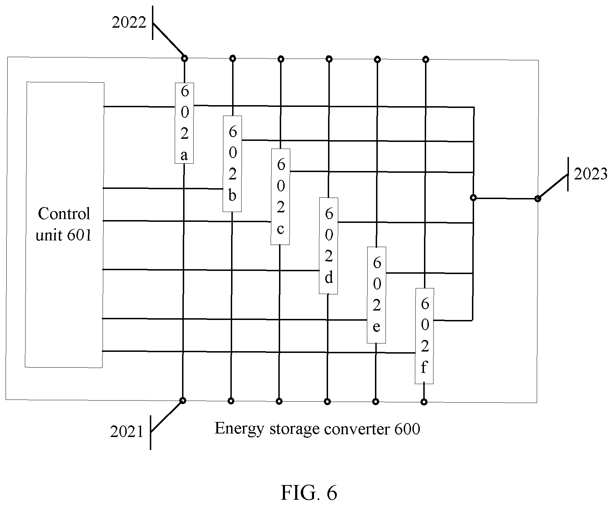

To further improve precision of maximum power point tracking, in a feasible implementation, as shown in FIG. 6, an energy storage converter 600 includes a control unit 601 and a plurality of converter units 602 (for example, 602a, 602b, ..., and 602f in the figure). The control unit 601 is connected to the plurality of converter units 602, and is configured to: for any converter unit 602, determine, based on electrical energy required by a power grid in a unit time, unit electrical energy that needs to be supplied by the converter unit 602 to a photovoltaic inverter in a unit time; and when electrical energy of a direct current received by the converter unit 602 from a photovoltaic port 2022 in a unit time is greater than the unit electrical energy of the converter unit 602, provide a first control signal A1 to the converter unit 602; or when electrical energy of a direct current received by the converter unit 602 from a photovoltaic port 2022 in a unit time is less than the unit electrical energy of the converter unit 602, provide a second control signal A2 to the converter unit 602.

The plurality of converter units 602 of the energy storage converter 600 are respectively connected to a plurality of photovoltaic ports 2022 and a plurality of inverter ports 2021 of the energy storage converter 600 in a one-to-one correspondence manner. Any one of the converter units 602 is configured to: receive a direct current input from a corresponding photovoltaic port 2022; and when receiving the first control signal A1 provided by the control unit 601, supply, to the photovoltaic inverter through a corresponding inverter port 2021, one portion of the direct current received from the corresponding photovoltaic port 2022, and store, into a storage battery through a storage battery port 2023, the other portion of the direct current input from the corresponding photovoltaic port 2022; or when receiving the second control signal A2 provided by the control unit 601, supply, to the photovoltaic inverter through a corresponding inverter port 2021, the direct current received from the corresponding photovoltaic port 2022 as one portion of a direct current, and obtain the other portion of the direct current from a storage battery through the storage battery port 2023 and supply the other portion of the direct current to the photovoltaic inverter through the corresponding inverter port 2021.

In a specific implementation process, the control unit 601 may determine unit electrical energy of each converter unit 602 in a plurality of feasible manners. For example, the control unit 601 divides the electrical energy required by the power grid in the unit time by a quantity of the converter units 602, and uses an obtained average value as the unit electrical energy of each converter unit 602. Obviously, the control unit 601 may alternatively determine the unit electrical energy of each converter unit 602 in another more complicated manner. Examples are not described one by one in this application.

When the energy storage converter 202 in FIG. 2 is the energy storage converter 600 shown in FIG. 6, because the plurality of converter units 602 in the energy storage converter 202 are respectively connected to a plurality of photovoltaic ports 2022 in a one-to-one correspondence manner, the energy storage converter 2022 can perform, by using any one of the plurality of converter units 602, maximum power point tracking on a photovoltaic subarray that is connected to a photovoltaic port 6022 corresponding to the converter unit 602, thereby improving entire precision of maximum power point tracking performed on the photovoltaic array. In addition, because the plurality of converter units 602 are respectively connected to the plurality of inverter ports 2021 in a one-to-one correspondence manner, the energy storage converter 202 can be connected to a string photovoltaic inverter 204. This provides a basis for integrating the string photovoltaic inverter 204 into a photovoltaic system.

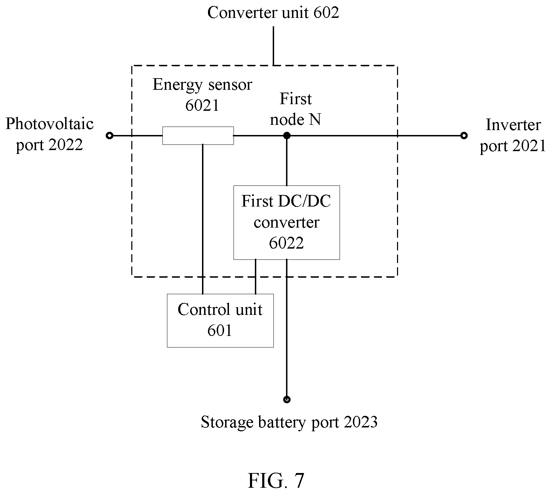

Based on the energy storage converter shown in FIG. 6, an embodiment of this application provides a specifically feasible structure of a converter unit, as shown in FIG. 7. The converter unit 602 includes an energy sensor 6021, a first node N, and a first DC/DC converter 6022.

The energy sensor 6021 is connected to a photovoltaic port 6022 corresponding to the converter unit 602, the first node N, and the control unit 601. The energy sensor 6021 is configured to: detect an energy value of electrical energy of a direct current that is received from the photovoltaic port 6022 in a unit time and that is transferred to the first node N, and provide the energy value to the control unit 601.

The first DC/DC converter is connected to the control unit 601, the first node N, and the storage battery port 2023, and is configured to: when receiving the first control signal A1 provided by the control unit 601, store, into the storage battery through the storage battery port 2023, one portion of the direct current that flows from the energy sensor 6021 to the first node N, and supply, to the photovoltaic inverter through an inverter port 2023 to which the first node N is connected, the other portion of the direct current that flows from the energy sensor 6021 to the first node N; or when receiving the second control signal A2 provided by the control unit 601, obtain one portion of a direct current from the storage battery through the storage battery port 2023 and supply the one portion of the direct current to the photovoltaic inverter through an inverter port 2023 to which the first node N is connected, and supply, to the photovoltaic inverter through the inverter port 2021 to which the first node N is connected, the direct current that flows from the energy sensor 6021 to the first node N as the other portion of the direct current.

It should be understood that concepts of "one portion" and "the other portion" are relative. For example, a direct current Z=X+Y, where X is one portion of the direct current Z, and Y is the other portion of the direct current Z, or it may be considered that Y is one portion of the direct current Z, and X is the other portion of the direct current Z.

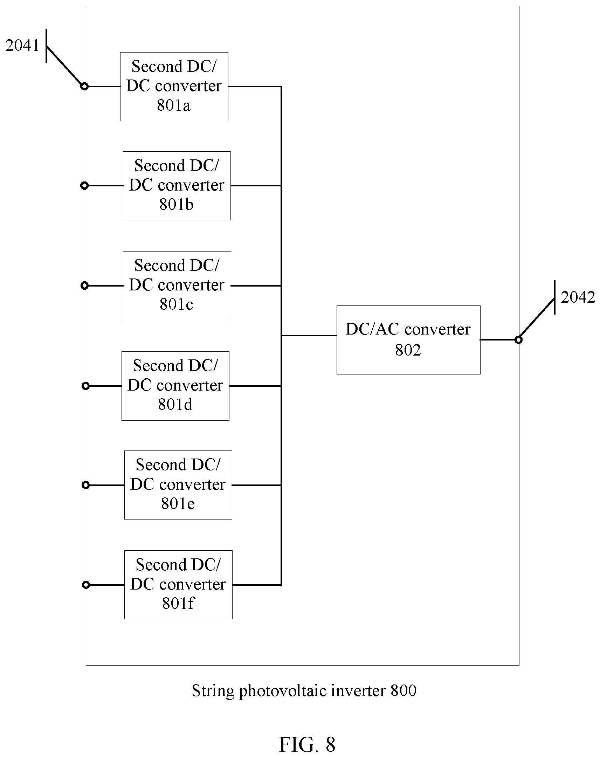

As described above, in the photovoltaic system 200 shown in FIG. 2, when the energy storage converter 202 uses a structure shown in FIG. 6, the photovoltaic inverter 204 in FIG. 2 may alternatively be a string photovoltaic inverter, as shown in FIG. 8. A photovoltaic inverter 800 includes an alternating current-direct current (DC/AC) converter 802, a plurality of second DC/DC converters 801 (for example, 801a, 801b, ..., and 801f in FIG. 8), an alternating current port 8042, and a plurality of direct current ports 8041. The plurality of second DC/DC converters 801 are connected to the DC/AC converter 802 and, are respectively connected to the plurality of direct current ports 2041 in a one-to-one correspondence manner. Any one of the second DC/DC converters 801 is configured to: receive, from a corresponding direct current port 2041, a direct current supplied by the energy storage converter 202, boost the direct current, and supply the boosted direct current to the DC/AC converter 802. The DC/AC converter 802 is connected to the alternating current port 2042 of the photovoltaic inverter 800, and is configured to: receive boosted direct currents supplied by the plurality of second DC/DC converters 801, convert the boosted direct currents into an alternating current, and output the alternating current to the power grid through the alternating current port 2042.

Compared with a centralized photovoltaic inverter, a string photovoltaic inverter has higher precision in maximum power point tracking. In the photovoltaic system provided in this application, even in a case in which a photovoltaic inverter performs maximum power point tracking on a photovoltaic array, precision of maximum power point tracking is ensured because the photovoltaic inverter is a string inverter. For specific application of the string photovoltaic inverter in the photovoltaic system, refer to specific implementations of three photovoltaic systems subsequently provided in this application.

When the string photovoltaic inverter performs maximum power point tracking on the photovoltaic array, an energy value of electrical energy of a direct current generated by the photovoltaic array in a unit time needs to be determined. Based on the photovoltaic system shown in FIG. 2, the energy storage converter 600 shown in FIG. 6, and the string photovoltaic inverter 800 shown in FIG. 8, this application provides the following two feasible implementations of performing maximum power point tracking by a string photovoltaic inverter.

In a feasible implementation, after sending a first instruction to a photovoltaic inverter 204 to trigger the photovoltaic inverter 204 to perform maximum power point tracking on a photovoltaic array 201, an energy storage converter 202 further sends a plurality of pieces of electrical energy information to the photovoltaic inverter 204. The plurality of pieces of electrical energy information respectively include unit identifiers of the plurality of converter units 602 and an energy value of electrical energy of a direct current that is obtained from a storage battery 603 in a unit time by a converter unit 602 corresponding to the unit identifier. For example, electrical energy information 1 includes a unit identifier of a converter unit 602a and an energy value Pa of electrical energy of a direct current that is obtained from the storage battery 3 in a unit time by the converter unit 602a; electrical energy information 2 includes a unit identifier of a converter unit 602b and an energy value Pb of electrical energy of a direct current that is obtained from the storage battery 3 in a unit time by the converter unit 602b; ...; and electrical energy information 6 includes a unit identifier of a converter unit 602f and an energy value Pf of electrical energy of a direct current that is obtained from the storage battery 3 in a unit time by the converter unit 602f.

When performing maximum power point tracking on the photovoltaic array 201, the photovoltaic inverter 204 is specifically configured to: for any received piece of electrical energy information, determine, based on a unit identifier of a converter unit 602 in the electrical energy information, a target DC/DC converter 801g corresponding to a first converter unit 602g, where the first converter unit 602g is a converter unit 602, corresponding to the unit identifier, in the plurality of converter units 602 of the energy storage converter 202, and the target DC/DC converter 801g is a second DC/DC converter 801 that receives a direct current supplied by the first converter unit 602g and that is in the plurality of second DC/DC converters 801 of the photovoltaic inverter 204; determine an energy value of electrical energy of a direct current that is received by the target DC/DC converter 801g from a corresponding direct current port 2041 in a unit time; determine, based on an energy value in the electrical energy information and the energy value of the electrical energy of the direct current that is received by the target DC/DC converter 801g from the corresponding direct current port 2041 in the unit time, an energy value of electrical energy of a direct current that is supplied by a first photovoltaic subarray 2011g in the photovoltaic array 201 to the energy storage converter 202 in a unit time, where the first photovoltaic subarray 2011g is a photovoltaic subarray 2011 that supplies the direct current to the first converter unit 602g and that is in a plurality of photovoltaic subarrays 2011 of the photovoltaic array 201; and perform maximum power point tracking on the first photovoltaic subarray 2011g based on the energy value of the electrical energy of the direct current that is supplied by the first photovoltaic subarray 2011g to the energy storage converter 202 in the unit time.

For example, after receiving the electrical energy information 1, the photovoltaic inverter 204 determines, based on the unit identifier in the electrical energy information 1, that the first converter unit 602g is the converter unit 602a in the energy storage converter 202. In the photovoltaic inverter 202, the second DC/DC converter 801a receives a direct current supplied by the converter unit 602a. Therefore, the second DC/DC converter 801a is the target DC/DC converter 801g. The photovoltaic inverter 204 further determines an energy value of electrical energy of a direct current that is received by the second DC/DC converter 801a from the direct current port 2041. Based on the energy value of the electrical energy of the direct current that is received by the second DC/DC converter 801a from the direct current port and the energy value, of the electrical energy of the direct current that is obtained from the storage battery 203 in the unit time by the converter unit 602a, in the electrical energy information 1, the photovoltaic inverter 204 can determine an energy value of electrical energy of a direct current supplied by the photovoltaic array 201 in a unit time. Further, the photovoltaic inverter 204 can perform, through the second DC/DC converter 801a, maximum power point tracking on a photovoltaic subarray connected to the converter unit 602a.

In another feasible implementation, electrical energy information may include a unit identifier of any one of the converter units 602 and an energy value of electrical energy of a direct current that is received by the converter unit 602 from a photovoltaic port 2022. After determining, based on the unit identifier of the converter unit 602 in the electrical energy information, a target DC/DC converter 801g corresponding to a first converter unit 602g, the photovoltaic inverter 204 determines, based on an energy value that is of electrical energy of a direct current that is received by the converter unit 602g from the photovoltaic port 2022 and that is in the electrical energy information, an energy value of electrical energy of a direct current that is supplied to the converter unit 602g in a unit time by a photovoltaic subarray, connected to the converter unit 602g, in a photovoltaic array 201; and then can perform maximum power point tracking on the photovoltaic subarray by using the target DC/DC converter 801g.

In any one of the foregoing implementations, the photovoltaic inverter 204 can determine, based on the plurality of pieces of electrical energy information provided by the energy storage converter 202, an energy value of electrical energy of a direct current that is supplied to the energy storage converter 202 in a unit time by each photovoltaic subarray 2011, connected to the energy storage converter 202, in the photovoltaic array 201, and then can perform maximum power point tracking on each photovoltaic subarray 2011. This retains a relatively precise maximum power point tracking feature of the string photovoltaic inverter. In addition, compared with an existing system architecture in which an energy storage converter and a photovoltaic array are directly coupled on a direct current side of a photovoltaic inverter, the photovoltaic inverter 204 in this application more accurately determines the energy value of the electrical energy of the direct current that is supplied to the energy storage converter 202 in the unit time by each photovoltaic subarray 2011 connected to the energy storage converter 202, further improving precision of maximum power point tracking.

To further describe the photovoltaic system provided in this application, based on the photovoltaic system shown in FIG. 2, this application provides the following three feasible system architectures of a photovoltaic system including a string photovoltaic inverter.

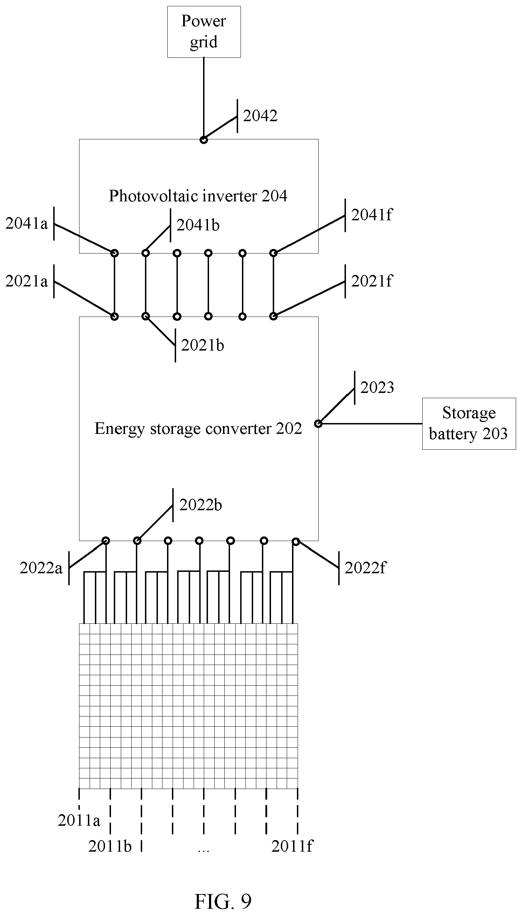

FIG. 9 is a first schematic diagram of a possible photovoltaic system architecture according to an embodiment of this application. In a photovoltaic system shown in FIG. 9, an energy storage converter 202 includes a plurality of photovoltaic ports 2022 (for example, photovoltaic ports 2022a, 2022b, ..., and 2022f in FIG. 9), and a photovoltaic array 201 includes a plurality of photovoltaic subarrays 2011 (for example, photovoltaic subarrays 2011a, 2011b, ..., and 2011f in FIG. 9). The plurality of photovoltaic subarrays 2011 are respectively connected to the plurality of photovoltaic ports 2022 in a one-to-one correspondence manner. A photovoltaic inverter 204 includes a plurality of direct current ports 2041 (for example, direct current ports 2041a, 2041b, ..., and 2041f in FIG. 9), and the energy storage converter 202 includes a plurality of inverter ports (for example, inverter ports 2021a, 2021b, ..., and 2021f in FIG. 9). The plurality of direct current ports 2041 are respectively connected to the plurality of inverter ports 2021 in a one-to-one correspondence manner.

When the photovoltaic system shown in FIG. 9 supplies electrical energy to a power grid, the photovoltaic array 201 converts absorbed light energy into electrical energy of a direct current, and outputs the direct current to the energy storage converter 202. The plurality of photovoltaic subarrays 2011 in the photovoltaic array 201 supply electrical energy to the energy storage converter 202 through the photovoltaic ports 2022, connected to the plurality of photovoltaic subarrays 2011, of the energy storage converter 202.

The energy storage converter 202 receives, through the plurality of photovoltaic ports 2022, direct currents supplied by the plurality of photovoltaic subarrays 2011 in the photovoltaic array 201. When electrical energy of a direct current supplied by the photovoltaic array 201 in a unit time is greater than electrical energy required by the power grid in a unit time, the energy storage converter 202 supplies, to the photovoltaic inverter 204 through the plurality of inverter ports 2021, one portion of the direct current supplied by the photovoltaic array 201 in the unit time, and stores, into a storage battery 203 through a storage battery port 2023, the other portion of the direct current supplied by the photovoltaic array 201 in the unit time; and simultaneously performs maximum power point tracking on the plurality of photovoltaic subarrays 2011 in the photovoltaic array 201. When the electrical energy of the direct current supplied by the photovoltaic array 201 in the unit time is less than the electrical energy required by the power grid in the unit time, the energy storage converter 202 supplies, to the photovoltaic inverter 204 through the plurality of inverter ports 2021, the direct current supplied by the photovoltaic array 201 in the unit time as one portion of a direct current, and supplies, to the photovoltaic inverter 204 through the plurality of inverter ports 2021, a direct current obtained from the storage battery 203 as the other portion of the direct current; and simultaneously sends a first instruction and a plurality of pieces of electrical energy information to the photovoltaic inverter 204 through a communications connection.

The photovoltaic inverter 204 receives, through the plurality of direct current ports 2041, a direct current supplied by the energy storage converter 202, converts the direct current into an alternating current, and outputs the alternating current to the power grid through an alternating current port 2042. After receiving the first instruction, the photovoltaic inverter 204 activates a maximum power point tracking function, and performs maximum power point tracking on the plurality of photovoltaic subarrays 2011 in the photovoltaic array 201 based on the plurality of pieces of electrical energy information provided by the energy storage converter 202.

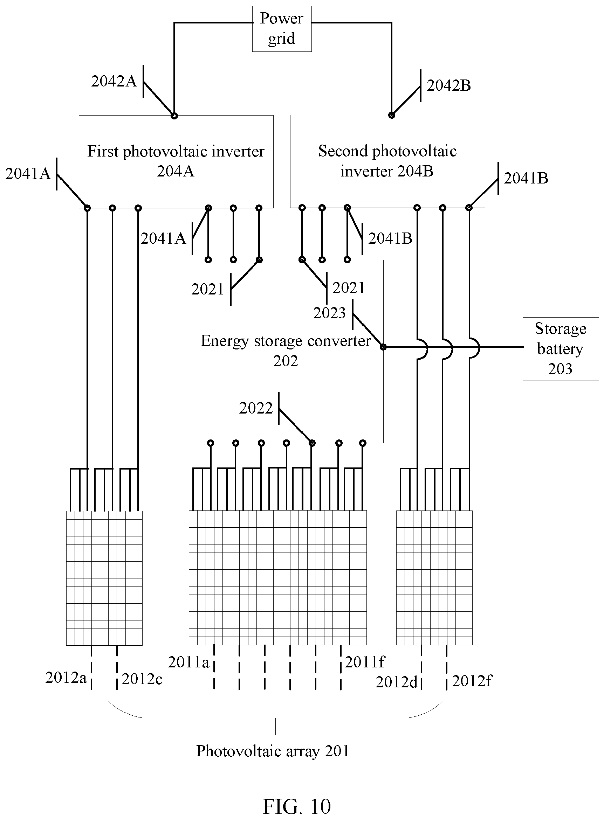

FIG. 10 is a second schematic diagram of a possible photovoltaic system architecture according to an embodiment of this application. As shown in FIG. 10, a photovoltaic inverter includes a first photovoltaic inverter 204A and a second photovoltaic inverter 204B, and a photovoltaic array 201 includes a plurality of photovoltaic subarrays 2011 and a plurality of additional subarrays 2012 (for example, 2012a, 2012b, ..., and 2012f in FIG. 10).

The first photovoltaic inverter 204A includes a plurality of first direct current ports 2041A, one part of the first direct current ports 2041A are connected to one part of inverter ports 2021 of an energy storage converter 202 in a one-to-one correspondence manner, and the other part of the first direct current ports 2041A are connected to one part of the additional subarrays 2022 of the photovoltaic array 201 in a one-to-one correspondence manner. The second photovoltaic inverter 204B includes a plurality of second direct current ports 2041B, one part of the second direct current ports 2041B are connected to the other part of the inverter ports 2021 of the energy storage converter 202 in a one-to-one correspondence manner, and the other part of the second direct current ports 2041B are connected to the other part of the additional subarrays 2022 of the photovoltaic array 201 in a one-to-one correspondence manner.

When a photovoltaic system shown in FIG. 10 supplies power to a power grid, the first photovoltaic inverter 204A determines energy values of electrical energy of direct currents input by the first direct current ports 2041A that are connected to the one part of the additional subarrays 2012 (for example, 2012a, 2012b, and 2012c in FIG. 10), and provides the energy values to the energy storage converter 202 through a wired or wireless communications connection; and the second photovoltaic inverter 204B determines energy values of electrical energy of direct currents input by the second direct current ports 2041B that are connected to the other part of the additional subarrays 2012 (for example, 2012d, 2012e, and 2012f in FIG. 10), and provides the energy values to the energy storage converter 202 through a wired or wireless communications connection.

The energy storage converter 202 receives the energy values, provided by the first photovoltaic inverter 204A, of the electrical energy of the direct currents and the energy values, provided by the first photovoltaic inverter 204B, of the electrical energy of the direct currents through the communications connection, and performs the following operations.

Step 1: Determine, based on electrical energy required by the power grid in a unit time, electrical energy P1 of a first alternating current that needs to be output by the first photovoltaic inverter 204A in a unit time and electrical energy P2 of a second alternating current that needs to be output by the second photovoltaic inverter 204B in a unit time.

In step 1, the energy storage converter 202 may allow the first photovoltaic inverter 204A and the second photovoltaic inverter 204B to evenly share the electrical energy required by the power grid in the unit time, or may determine, based on conversion efficiency of the two photovoltaic inverters, the electrical energy of the alternating currents that need to be output by the two photovoltaic inverters to the power grid. For example, if conversion efficiency of the first photovoltaic inverter 204A is obviously higher than conversion efficiency of the second photovoltaic inverter 204B, the first photovoltaic inverter 204A may supply, to the power grid, a larger portion of the electrical energy required by the power grid.

Step 2: Determine, based on the energy values provided by the first photovoltaic inverter 204A and the electrical energy of the first alternating current, electrical energy Pa1 of a first direct current required by the first photovoltaic inverter 204A in a unit time.

In step 2, the energy values provided by the first photovoltaic inverter 204A are the energy values of the electrical energy of the direct currents supplied to the first photovoltaic inverter 204A by the additional subarrays 2012 that are connected to the first photovoltaic inverter 204A. When the energy values, provided by the first photovoltaic inverter 204A, of the electrical energy of the direct currents are less than the electrical energy P1 of the first alternating current, a difference between the electrical energy P1 of the first alternating current and the energy values of the electrical energy of the direct currents may be used as the electrical energy Pa1 of the first direct current required by the first photovoltaic inverter in a unit time. When the energy values provided by the first photovoltaic inverter 204A are greater than the electrical energy P1 of the first alternating current, the energy storage converter 202 does not need to supply a direct current to the first photovoltaic inverter 204A, and may determine that the electrical energy Pa1 of the first direct current is 0.

Step 3: Determine, based on the energy values provided by the second photovoltaic inverter 204B and the electrical energy of the second alternating current, electrical energy Pb1 of a second direct current required by the second photovoltaic inverter 204B in a unit time.

Specific implementation of step 3 is similar to that of step 2, and details are not described again.

Step 4: When electrical energy of direct currents input from the photovoltaic ports 2022 in a unit time is greater than a sum of the electrical energy Pa1 of the first direct current and the electrical energy Pa2 of the second direct current, supply, to the first photovoltaic inverter 204A and the second photovoltaic inverter 204B through the inverter ports 2021, one portion of the direct currents input from the photovoltaic ports 2022, and store, into the storage battery 203 through the storage battery port 2023, the other portion of the direct currents input from the photovoltaic ports 2022; or when electrical energy of direct currents input from the photovoltaic ports 2022 in a unit time is less than a sum of the electrical energy Pa1 of the first direct current and the electrical energy Pb1 of the second direct current, supply, to the first photovoltaic inverter 204A and the second photovoltaic inverter 204B through the inverter ports 2021, the direct currents input from the photovoltaic ports 2022 as one portion of a direct current, and obtain the other portion of the direct current from the storage battery 203 through the storage battery port 2023 and supply the other portion of the direct current to the first photovoltaic inverter 204A and the second photovoltaic inverter 204B through the inverter ports 2021.

In step 4, supplying, by the energy storage converter 202, the direct currents to the first photovoltaic inverter 204A and the second photovoltaic inverter 204B through the plurality of inverter ports 2021 may be specifically: supplying, to the first photovoltaic inverter 204A through the inverter ports 2021 that are connected to the first photovoltaic inverter 204A, a direct current whose electrical energy has an energy value of Pa1 in a unit time; and supplying, to the second photovoltaic inverter 204B through the inverter ports 2021 that are connected to the second photovoltaic inverter 204B, a direct current whose electrical energy has an energy value of Pb1 in a unit time.

In addition, when the electrical energy of the direct currents input from the photovoltaic ports 2022 in the unit time is greater than the sum of the electrical energy Pa1 of the first direct current and the electrical energy Pa2 of the second direct current, the energy storage converter 202 further performs maximum power point tracking on the plurality of photovoltaic subarrays 2011 in the photovoltaic array 201 by using the plurality of photovoltaic ports 2022, the first photovoltaic inverter 204A performs maximum power point tracking on the additional subarrays 2012a, 2012b, and 2012c that are connected to the first photovoltaic inverter 204A, and the second photovoltaic inverter 204B performs maximum power point tracking on the additional subarrays 2012d, 2012e, and 2012f that are connected to the second photovoltaic inverter 204B. When the electrical energy of the direct currents input from the photovoltaic ports 2022 in the unit time is less than the sum of the electrical energy Pa1 of the first direct current and the electrical energy Pa2 of the second direct current, the first photovoltaic inverter 204A performs maximum power point tracking on one part of the photovoltaic subarrays 2011 and on the additional subarrays 2012a, 2012b, and 2012c that are connected to the first photovoltaic inverter 204A, and the second photovoltaic inverter 204B performs maximum power point tracking on the other part of the photovoltaic subarrays 2011 and on the additional subarrays 2012d, 2012e, and 2012f that are connected to the second photovoltaic inverter 204B.

When conversion efficiency of a single photovoltaic inverter and theoretical luminous efficiency of a photovoltaic array are fixed, the foregoing system architecture can implement a lower over-match ratio.

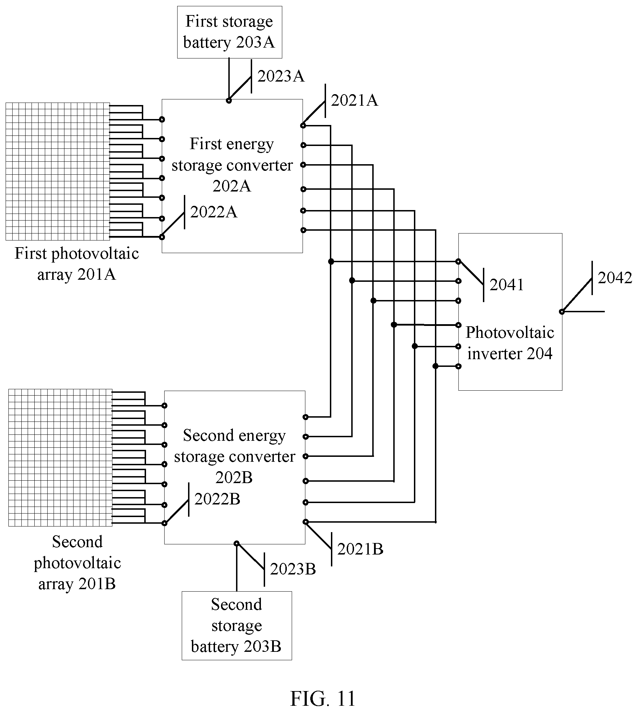

FIG. 11 is a third schematic diagram of a possible photovoltaic system architecture according to an embodiment of this application. As shown in FIG. 11, a photovoltaic array includes a first photovoltaic array 201A and a second photovoltaic array 201B, an energy storage converter includes a first energy storage converter 202A and a second energy storage converter 202B, and a storage battery includes a first storage battery 203A and a second storage battery 203B. First photovoltaic ports 2021A of the first energy storage converter 202A are connected to the first photovoltaic array 201A, first inverter ports 2021A of the first energy storage converter 202A are connected to one part of direct current ports 2041 of a photovoltaic inverter 204, and a first storage battery port 2023A of the first energy storage converter 202A is connected to the first storage battery 203A. Second photovoltaic ports 2022B of the second energy storage converter 202B are connected to the second photovoltaic array 201B, second inverter ports 2021B of the second energy storage converter 202B are connected to the other part of the direct current ports 2041 of the photovoltaic inverter 204, and a second storage battery port 2023B of the second energy storage converter 202B is connected to the second storage battery 203.

When a photovoltaic system shown in FIG. 11 supplies power to a power grid, the first energy storage converter 202A performs the following steps.

Step 1: Determine, based on electrical energy required by the power grid in a unit time, electrical energy P3 of a third direct current that needs to be supplied to the photovoltaic inverter 202 by the first energy storage converter 202A in a unit time, and electrical energy P4 of a fourth direct current that needs to be supplied to the photovoltaic inverter 202 by the second energy storage converter 202B in a unit time, and provide an energy value of the electrical energy P4 of the fourth direct current to the second energy storage converter 202B through a communications connection.

In step 1, the first energy storage converter 202A is used as a primary energy storage converter, and the second energy storage converter 202B is used as a secondary energy storage converter. The first energy storage converter 202A determines the electrical energy P3 of the third direct current that needs to be supplied to the photovoltaic inverter 204 by the first energy storage converter 202A and the electrical energy P4 of the fourth direct current that needs to be supplied to the photovoltaic inverter 204 by the second energy storage converter 202B. The photovoltaic inverter 204 may convert the received direct currents into an alternating current, and output the alternating current to the power grid. Therefore, when factors such as loss are not considered, a sum of the third direct current P3 and the fourth direct current P4 may be the electrical energy required by the power grid in the unit time.

Step 2: When electrical energy of direct currents generated by the first photovoltaic array 201A in a unit time is greater than the electrical energy P3 of the third direct current, supply, to the photovoltaic inverter 204 through the first inverter ports 2021A, one portion of the direct currents input from the first photovoltaic ports 2022A, and store, into the first storage battery 203A through the first storage battery port 2023A, the other portion of the direct currents input from the first photovoltaic ports 2022A; or when electrical energy of direct currents generated by the first photovoltaic array 201A in a unit time is less than the electrical energy P3 of the third direct current, supply, to the photovoltaic inverter 204 through the first inverter ports 2021A, the direct currents input from the first photovoltaic ports 2022A as one portion of a direct current, and obtain the other portion of the direct current from the first storage battery 203A through the first storage battery port 2023A and supply the other portion of the direct current to the photovoltaic inverter 204 through the first inverter ports 2021A.

The second energy storage converter performs the following steps.

Step 1: Obtain the energy value, provided by the first energy storage converter 202A, of the electrical energy P4 of the fourth direct current.

Step 2: When electrical energy of direct currents generated by the second photovoltaic array 201B in a unit time is greater than the electrical energy P4 of the fourth direct current, supply, to the photovoltaic inverter 204 through the second inverter ports 2021B, one portion of the direct currents input from the second photovoltaic ports 2022B, and store, into the second storage battery 203B through the second storage battery port 2023B, the other portion of the direct currents input from the second photovoltaic ports 2022B; or when electrical energy of direct currents generated by the second photovoltaic array 201B in a unit time is less than the electrical energy P4 of the fourth direct current, supply, to the photovoltaic inverter 204 through the second inverter ports 2021B, the direct currents input from the second photovoltaic ports 2022B as one portion of a direct current, and obtain the other portion of the direct current from the second storage battery 203B through the second storage battery port 2023B and supply the other portion of the direct current to the photovoltaic inverter 204 through the second inverter ports 2021B.

In addition, when the electrical energy of the direct currents generated by the first photovoltaic array 201A in the unit time is greater than the electrical energy P3 of the third direct current, the first energy storage converter 202A further performs maximum power point tracking on a plurality of photovoltaic subarrays in the first photovoltaic array 201A. When the electrical energy of the direct currents generated by the first photovoltaic array 201A in the unit time is less than the electrical energy P3 of the third direct current, the photovoltaic inverter 204 performs maximum power point tracking on a plurality of photovoltaic subarrays in the first photovoltaic array 201A. Similarly, when the electrical energy of the direct currents generated by the second photovoltaic array 201B in the unit time is greater than the electrical energy P4 of the fourth direct current, the second energy storage converter 202B further performs maximum power point tracking on a plurality of photovoltaic subarrays in the second photovoltaic array 201B. When the electrical energy of the direct currents generated by the second photovoltaic array 201B in the unit time is less than the electrical energy P4 of the fourth direct current, the photovoltaic inverter 204 performs maximum power point tracking on a plurality of photovoltaic subarrays in the second photovoltaic array 201B.

When conversion efficiency of a photovoltaic inverter and theoretical luminous efficiency of a single photovoltaic array are fixed, the foregoing system architecture implements a higher over-match ratio.

Although some preferred embodiments of this application have been described, persons skilled in the art can make changes and modifications to these embodiments once they learn the basic inventive concept. Therefore, the following claims are intended to be construed as to cover the preferred embodiments and all changes and modifications falling within the scope of this application.

Obviously, persons skilled in the art can make various modifications and variations to this application without departing from the spirit and scope of this application. This application is intended to cover these modifications and variations of this application provided that they fall within the scope of protection defined by the following claims and their equivalent technologies.

## Claims

1. A photovoltaic system, comprising a photovoltaic array, an energy storage converter, a storage battery, and a photovoltaic inverter, wherein
the photovoltaic array is configured to convert absorbed light energy into electrical energy of a direct current, and output the direct current to the energy storage converter;
the energy storage converter comprises at least one photovoltaic port, at least one storage battery port, and at least one inverter port, wherein the at least one photovoltaic port is connected to the photovoltaic array, the at least one storage battery port is connected to the storage battery, and the at least one inverter port is connected to the photovoltaic inverter; and the energy storage converter is configured to: when electrical energy of a direct current generated by the photovoltaic array in a unit time is greater than electrical energy required by a power grid in a unit time, supply, to the photovoltaic inverter through the inverter port, one portion of the direct current input from the photovoltaic port, and store, into the storage battery through the storage battery port, the other portion of the direct current input from the photovoltaic port; or when electrical energy of a direct current generated by the photovoltaic array in a unit time is less than electrical energy required by a power grid in a unit time, supply, to the photovoltaic inverter through the inverter port, the direct current input from the photovoltaic port as one portion of a direct current, and obtain the other portion of the direct current from the storage battery through the storage battery port and supply the other portion of the direct current to the photovoltaic inverter through the inverter port;
the storage battery is configured to store a direct current supplied by the energy storage converter or to supply a direct current to the energy storage converter; and
the photovoltaic inverter comprises at least one direct current port and at least one alternating current port, wherein the at least one direct current port is connected to the energy storage converter, and the at least one alternating current port is configured to be connected to the power grid; and the photovoltaic inverter is configured to: receive a direct current from the energy storage converter through the direct current port, convert the direct current into an alternating current, and output the alternating current to the power grid through the alternating current port.

2. The system according to claim 1, wherein the energy storage converter is further configured to:
when the electrical energy of the direct current generated by the photovoltaic array in the unit time is greater than the electrical energy required by the power grid in the unit time, perform maximum power point tracking on the photovoltaic array based on the electrical energy of the direct current generated by the photovoltaic array in the unit time; or
when the electrical energy of the direct current generated by the photovoltaic array in the unit time is less than the electrical energy required by the power grid in the unit time, send a first instruction to the photovoltaic inverter, wherein the first instruction is used to trigger the photovoltaic inverter to perform maximum power point tracking on the photovoltaic array.

3. The system according to claim 1 or 2, wherein the energy storage converter comprises a control unit and a plurality of converter units;
the control unit is connected to the plurality of converter units, and is configured to:
for any converter unit, determine, based on the electrical energy required by the power grid in the unit time, unit electrical energy that needs to be supplied by the converter unit to the photovoltaic inverter in a unit time; and
when electrical energy of a direct current received by the converter unit from the photovoltaic port in a unit time is greater than the unit electrical energy, provide a first control signal to the converter unit; or
when electrical energy of a direct current received by the converter unit from the photovoltaic port in a unit time is less than the unit electrical energy, provide a second control signal to the converter unit; and
the plurality of converter units are respectively connected to a plurality of photovoltaic ports and a plurality of inverter ports of the energy storage converter in a one-to-one correspondence manner, and any one of the converter units is configured to:
receive a direct current input from a corresponding photovoltaic port; and
when receiving the first control signal provided by the control unit, supply, to the photovoltaic inverter through a corresponding inverter port, one portion of the direct current received from the corresponding photovoltaic port, and store, into the storage battery through the storage battery port, the other portion of the direct current input from the corresponding photovoltaic port; or
when receiving the second control signal provided by the control unit, supply, to the photovoltaic inverter through a corresponding inverter port, the direct current received from the corresponding photovoltaic port as one portion of a direct current, and obtain the other portion of the direct current from the storage battery through the storage battery port and supply the other portion of the direct current to the photovoltaic inverter through the corresponding inverter port.

4. The system according to claim 3, wherein the converter unit comprises an energy sensor, a first node, and a first DC/DC converter, and the first node is connected to an inverter port corresponding to the converter unit;
the energy sensor is connected to a photovoltaic port corresponding to the converter unit, the first node, and the control unit, and is configured to: detect an energy value of electrical energy of a direct current that is received from the photovoltaic port in a unit time and transferred to the first node, and provide the energy value to the control unit;
the first DC/DC converter is connected to the control unit, the first node, and the storage battery port, and is configured to: when receiving the first control signal provided by the control unit, supply, to the photovoltaic inverter through the inverter port to which the first node is connected, one portion of the direct current that flows from the energy sensor to the first node, and store, into the storage battery through the storage battery port, the other portion of the direct current that flows from the energy sensor to the first node; or when receiving the second control signal provided by the control unit, supply, to the photovoltaic inverter through the inverter port to which the first node is connected, the direct current that flows from the energy sensor to the first node as one portion of a direct current, and obtain the other portion of the direct current from the storage battery through the storage battery port and supply the other portion of the direct current to the photovoltaic inverter through the inverter port to which the first node is connected; and
the first node is connected to the inverter port corresponding to the converter unit, and is configured to: receive a direct current from the energy sensor and/or the first DC/DC converter, and supply the direct current to the photovoltaic inverter through the inverter port.

5. The system according to claim 2, wherein the photovoltaic inverter comprises an AC/DC converter, a plurality of second DC/DC converters, an alternating current port, and a plurality of direct current ports;
the plurality of second DC/DC converters are respectively connected to the AC/DC converter and the plurality of direct current ports in a one-to-one correspondence manner, and any one of the second DC/DC converters is configured to:
receive, from a corresponding direct current port, a direct current supplied by the energy storage converter, boost the direct current, and supply a boosted direct current to the AC/DC converter; and
the AC/DC converter is connected to the alternating current port of the photovoltaic inverter, and is configured to:
receive boosted direct currents supplied by the plurality of second DC/DC converters, convert the boosted direct currents into an alternating current, and output the alternating current to the power grid through the alternating current port.

6. The system according to claim 5, wherein the energy storage converter is further configured to:
after sending the first instruction to the photovoltaic inverter, send a plurality of pieces of electrical energy information to the photovoltaic inverter, wherein the plurality of pieces of electrical energy information respectively comprise unit identifiers of the plurality of converter units and energy values of electrical energy of direct currents that are obtained from the storage battery in a unit time by the converter units corresponding to the unit identifiers; and
when performing maximum power point tracking on the photovoltaic array, the photovoltaic inverter is specifically configured to:
for any one piece of electrical energy information, determine, based on a unit identifier of a converter unit in the electrical energy information, a target DC/DC converter corresponding to a first converter unit, wherein the first converter unit is a converter unit, corresponding to the unit identifier, in the plurality of converter units of the energy storage converter, and the target DC/DC converter is a second DC/DC converter that receives a direct current supplied by the first converter unit and that is in the plurality of second DC/DC converters of the photovoltaic inverter;
determine an energy value of electrical energy of a direct current that is received by the target DC/DC converter from a corresponding direct current port in a unit time;
determine, based on an energy value in the electrical energy information and the energy value of the electrical energy of the direct current that is received by the target DC/DC converter from the corresponding direct current port in the unit time, an energy value of electrical energy of a direct current that is supplied by a first photovoltaic subarray in the photovoltaic array to the energy storage converter in a unit time, wherein the first photovoltaic subarray is a photovoltaic subarray that supplies the direct current to the first converter unit and that is in a plurality of photovoltaic subarrays of the photovoltaic array; and
perform maximum power point tracking on the first photovoltaic subarray based on the energy value of the electrical energy of the direct current that is supplied by the first photovoltaic subarray to the energy storage converter in the unit time.

7. The system according to any one of claims 1 to 6, wherein the energy storage converter comprises a plurality of photovoltaic ports, and the photovoltaic array comprises a plurality of photovoltaic subarrays;
the plurality of photovoltaic subarrays are respectively connected to the plurality of photovoltaic ports in a one-to-one correspondence manner;
the photovoltaic inverter comprises a plurality of direct current ports, and the energy storage converter comprises a plurality of inverter ports; and
the plurality of direct current ports are respectively connected to the plurality of inverter ports in a one-to-one correspondence manner.

8. The system according to any one of claims 1 to 7, wherein the photovoltaic inverter comprises a first photovoltaic inverter and a second photovoltaic inverter, and the photovoltaic array comprises a plurality of photovoltaic subarrays and a plurality of additional subarrays;
the first photovoltaic inverter comprises a plurality of first direct current ports, one part of the first direct current ports are connected to one part of the inverter ports of the energy storage converter in a one-to-one correspondence manner, and the other part of the first direct current ports are connected to one part of the additional subarrays of the photovoltaic array in a one-to-one correspondence manner;
the second photovoltaic inverter comprises a plurality of second direct current ports, one part of the second direct current ports are connected to the other part of the inverter ports of the energy storage converter in a one-to-one correspondence manner, and the other part of the second direct current ports are connected to the other part of the additional subarrays of the photovoltaic array in a one-to-one correspondence manner;
the first photovoltaic inverter is configured to: determine energy values of electrical energy of direct currents input by the first direct current ports that are connected to the one part of the additional subarrays, and provide the energy values to the energy storage converter;
the second photovoltaic inverter is configured to: determine energy values of electrical energy of direct currents input by the second direct current ports that are connected to the other part of the additional subarrays, and provide the energy values to the energy storage converter; and
the energy storage converter is specifically configured to:
determine, based on the electrical energy required by the power grid in the unit time, electrical energy of a first alternating current that needs to be output by the first photovoltaic inverter in a unit time and electrical energy of a second alternating current that needs to be output by the second photovoltaic inverter in a unit time;
determine, based on the energy values provided by the first photovoltaic inverter and the electrical energy of the first alternating current, electrical energy of a first direct current required by the first photovoltaic inverter in a unit time;
determine, based on the energy values provided by the second photovoltaic inverter and the electrical energy of the second alternating current, electrical energy of a second direct current required by the second photovoltaic inverter in a unit time; and
when electrical energy of direct currents input from the photovoltaic ports in a unit time is greater than a sum of the electrical energy of the first direct current and the electrical energy of the second direct current, supply, to the first photovoltaic inverter and the second photovoltaic inverter through the inverter ports, one portion of the direct currents input from the photovoltaic ports, and store, into the storage battery through the storage battery port, the other portion of the direct currents input from the photovoltaic ports; or when electrical energy of direct currents input from the photovoltaic ports in a unit time is less than a sum of the electrical energy of the first direct current and the electrical energy of the second direct current, supply, to the first photovoltaic inverter and the second photovoltaic inverter through the inverter ports, the direct currents input from the photovoltaic ports as one portion of a direct current, and obtain the other portion of the direct current from the storage battery through the storage battery port and supply the other portion of the direct current to the first photovoltaic inverter and the second photovoltaic inverter through the inverter ports.

9. The system according to any one of claims 1 to 7, wherein the photovoltaic array comprises a first photovoltaic array and a second photovoltaic array, the energy storage converter comprises a first energy storage converter and a second energy storage converter, and the storage battery comprises a first storage battery and a second storage battery;
first photovoltaic ports of the first energy storage converter are connected to the first photovoltaic array, first inverter ports of the first energy storage converter are connected to one part of the direct current ports of the photovoltaic inverter, and a first storage battery port of the first energy storage converter is connected to the first storage battery;
second photovoltaic ports of the second energy storage converter are connected to the second photovoltaic array, second inverter ports of the second energy storage converter are connected to the other part of the direct current ports of the photovoltaic inverter, and a second storage battery port of the second energy storage converter is connected to the second storage battery;
the first energy storage converter is configured to:
determine, based on electrical energy of an alternating current required by the power grid in a unit time, electrical energy of a third direct current that needs to be supplied to the photovoltaic inverter by the first energy storage converter in a unit time and electrical energy of a fourth direct current that needs to be supplied to the photovoltaic inverter by the second energy storage converter in a unit time, and provide an energy value of the electrical energy of the fourth direct current to the second energy storage converter; and
when electrical energy of direct currents generated by the first photovoltaic array in a unit time is greater than the electrical energy of the third direct current, supply, to the photovoltaic inverter through the first inverter ports, one portion of the direct currents input from the first photovoltaic ports, and store, into the first storage battery through the first storage battery port, the other portion of the direct currents input from the first photovoltaic ports; or when electrical energy of direct currents generated by the first photovoltaic array in a unit time is less than the electrical energy of the third direct current, supply, to the photovoltaic inverter through the first inverter ports, the direct currents input from the first photovoltaic ports as one portion of a direct current, and obtain the other portion of the direct current from the first storage battery through the first storage battery port and supply the other portion of the direct current to the photovoltaic inverter through the first inverter ports; and
the second energy storage converter is configured to:
obtain the energy value, provided by the first energy storage converter, of the electrical energy of the fourth direct current; and
when electrical energy of direct currents generated by the second photovoltaic array in a unit time is greater than the electrical energy of the fourth direct current, supply, to the photovoltaic inverter through the second inverter ports, one portion of the direct currents input from the second photovoltaic ports, and store, into the second storage battery through the second storage battery port, the other portion of the direct currents input from the second photovoltaic ports; or when electrical energy of direct currents generated by the second photovoltaic array in a unit time is less than the electrical energy of the fourth direct current, supply, to the photovoltaic inverter through the second inverter ports, the direct currents input from the second photovoltaic ports as one portion of a direct current, and obtain the other portion of the direct current from the second storage battery through the second storage battery port and supply the other portion of the direct current to the photovoltaic inverter through the second inverter ports.

10. The system according to any one of claims 1 to 9, wherein the storage battery comprises a lead carbon battery, and/or a lithium iron phosphate battery, and/or a ternary lithium battery, and/or a sodium sulfur battery, and/or a flow battery.

11. The system according to any one of claims 1 to 10, wherein the electrical energy required by the power grid in the unit time is determined by the energy storage converter according to a power supply instruction sent by the power grid.
